# EUROPÄISCHE PATENTSCHRIFT

(11) **EP 2 184 127 B1**
(45) Veröffentlichungstag und Bekanntmachung des Hinweises auf die Patenterteilung: **21.08.2013**
(21) Anmeldenummer: 09013456.0
(22) Anmeldetag: 26.10.2009
(51) Int. Cl.: B23K 26/00, B41M 5/26, G02C 7/02

(54) **Lasermarkierverfahren, Verwendung einer Lasermarkiervorrichtung und Optikelement**
Laser marking method, use of a laser marking device and lens element
Procédé de marquage au laser, utilisation d'un dispositif de marquage au laser et élément optique

(30) Priorität: 29.10.2008 DE 102008056136
(43) Veröffentlichungstag der Anmeldung: 12.05.2010
(73) Patentinhaber: 3D-Micromac AG, 09126 Chemnitz (DE)
(72) Erfinder: Petsch, Tino, 09127 Chemnitz (DE); Keiper, Bernd, Dr., 09217 Burgstädt (DE); Albert, Sven, 09322 Penig (DE); Höche, Thomas, Dr., 06120 Halle (DE)
(74) Vertreter: Patentanwälte Ruff, Wilhelm, Beier, Dauster & Partner

(56) Entgegenhaltungen:
- EP-A1- 1 645 904
- WO-A1-03/033199
- DD-A3- 237 972
- DE-A1- 4 405 203
- US-A1- 2004 032 566

## Beschreibung

Die Erfindung bezieht sich auf ein Verfahren zur Herstellung einer dauerhaften Markierung in einem Optikelement, das aus einem im sichtbaren Spektralbereich transparenten Material besteht, auf die Verwendung einer zur Durchführung des Verfahrens geeigneten Vorrichtung und auf ein mit Hilfe des Verfahrens oder der Vorrichtung herstellbares Optikelement. Ein bevorzugtes Anwendungsgebiet ist die Markierung von Brillenlinsen und anderen transparenten Optikelementen für die Ophthalmik.

### Beschreibung des verwandten Standes der Technik

Bei der Herstellung von Brillenlinsen, die unabhängig vom Material häufig auch als Brillengläser bezeichnet werden, werden diese meist mit einer oder mehreren dauerhaften Markierungen versehen. Eine Markierung kann beispielsweise Informationen über den Hersteller, eine Chargennummer oder Charakteristika optischer Elemente enthalten. Es können auch Markierungen zur Kennzeichnung von optischen Achsen, Zentrierpunkten oder anderen die Linsenart definierenden Informationen vorgesehen sein, um es beispielsweise bei Gleitsichtlinsen dem Augenoptiker zu ermöglichen, die Brillenlinse einwandfrei in das dafür vorgesehene Brillengestell einzupassen. Derartige Markierungen sollen in der Regel für den Brillenträger oder bei normalem Gebrauch der Brille unsichtbar ("semi visible") sein und können entsprechend klein dimensioniert sein. Markierungen können sich auch in einem peripheren Bereich der Brillenlinse befinden, der bei der Einpassung in das Brillengestell abgetrennt wird. Solche Markierungen können auch deutlich sichtbar ("visible") sein. Auch andere im sichtbaren Spektralbereich transparente Materialien werden gelegentlich mit Markierungen versehen, beispielsweise Linsen für mehrlinsige Optiken. Zur Gewährleistung der Nachverfolgbarkeit ist in den hier interessierenden Fällen eine permanente, d.h. dauerhafte Markierung gewünscht.

Zunächst wurden Markierungen im Wege der Gravur auf rein mechanischem Wege erzeugt (z.B. DE 35 34 920 C2). Es ist auch bekannt, Markierungen in Form von Ätzzeichen durch Herauslaugen von Glasbestandteilen nach Abdeckung der nicht zu markierenden Flächen beispielsweise mit einem Lack zu erzeugen. Die EP 0 103 217 beschreibt die Herstellung von Brillenlinsen mit einer reflexvermindernden Schicht, wobei in der reflexvermindernden Schicht eine Markierung in Form einer Aussparung erzeugt wird.

Bald nach der kommerziellen Verfügbarkeit von Lasern ging man dazu über, im sichtbaren Spektralbereich transparente Gegenstände durch Bestrahlung mit hochenergetischer Laserstrahlung oberflächennah so zu verändern, dass dauerhafte, sichtbare Markierungen entstehen. Dieser Ansatz ist beispielsweise im Patent US 2,746,193 am Beispiel der Markierung von Glaswaren dargestellt.

Ein oberflächennaher Materialabtrag, der zu einer sichtbaren, dauerhaften Markierung führen kann, ist bei nicht zu hohen Leistungsdichten der Laserstrahlung und nicht zu kurzen Pulse der Laserstrahlung nur dann möglich, wenn das zu bearbeitende Material für die verwendete Laserwellenlänge zumindest eine Teilabsorption aufweist, also im Bereich der Arbeitswellenlänge der Laserstrahlung nicht völlig transparent bzw. völlig absorptionsfrei ist. Da die für Brillenlinsen verwendeten Materialien im sichtbaren Spektralbereich (typischerweise zwischen ca. 380 nm und 710 nm) und häufig auch in angrenzenden Spektralbereichen der Ultraviolettstrahlung und/oder der Infrarotstrahlung kaum absorbieren, wurde speziell für den Bereich der Markierung von Brillenlinsen mit Laserstrahlung gearbeitet, deren Arbeitswellenlänge deutlich außerhalb des sichtbaren Spektralbereiches liegt.

Das Patent EP 0 307 874 B1 beschreibt beispielsweise den Einsatz eines Excimer-Lasers mit einer Arbeitswellenlänge von ca. 193 nm zur Erzeugung einer Markierung in einem Antireflex-Schichtsystem derart, dass die Markierung nur im reflektierten Licht sichtbar ist. Da Ultraviolettlicht bei Laserwellenlängen von 193 nm oder 248 nm, wie sie von Excimer-Lasern erzeugt werden, aggressiv unter Bildung von Ozon mit Luftsauerstoff reagiert und dadurch eine Schwächung der Laserintensität erfährt, wird in der DE 10 2004 004 514 A1 eine Vorrichtung zum Signieren bzw. Markieren von Brillengläsern vorgeschlagen, bei der der Laserstrahl eines Excimer-Lasers durch ein Gehäuse geführt wird, das mit einem mit dem Laserstrahl nicht reagierenden Schutzgas gefüllt ist.

Die japanische Patentanmeldung mit Veröffentlichungsnummer JP 2003 156667 AA beschreibt den Einsatz eines frequenzvervielfachten Festkörperlasers, dessen Arbeitswellenlänge durch die Frequenzvervielfachung ebenfalls im ultravioletten Spektralbereich liegt.

Eine andere Klasse von Laservorrichtungen zur Markierung von Brillengläsern und vergleichbaren Gegenständen aus im sichtbaren Spektralbereich transparenten Materialien verwendet als Lichtquelle CO₂-Laser die im mittleren Infrarotbereich abstrahlen. So wird beispielsweise in der US 4,219,721 vorgeschlagen, Kunststofflinsen auf Basis von Polymethylmethacrylat (PMMA) mit Hilfe von Infrarotstrahlung aus dem Wellenlängenbereich um 10.6 µm zu markieren.

In dem Patent US 5,767,483 wird vorgeschlagen, Glas und andere Materialien mit vergleichbarer Wärmeleitfähigkeit mittels CO₂-Laser zu markieren.

Ein weiterer bekannter Ansatz ist das Aufbringen einer in einem durch herkömmliche Laser gut abgedeckten Spektralbereich besonders stark absorbierenden Dünnschicht auf die zu markierende Oberfläche und deren anschließende lokale Bestrahlung, wodurch die Absorptionsschicht mit dem Substrat lokal eine haftende Verbindung eingeht. Ein solches indirektes Verfahren ist beispielsweise aus der US 6,075,223 bekannt.

Ebenfalls bekannt ist die Markierung von Kontaktlinsen mittels Laserstrahlung (z.B. EP 946 896 B1). Weiterhin bekannt ist die Erzeugung von Markierungen in Gießformen für die Herstellung von Kontaktlinsen mittels Laserstrahlung (JP 7186290A). In letzterem Fall entstehen an den durch Gießen hergestellten Kontaktlinsen erhabene Markierungen als Negativform der mittels Laserstrahlung erzeugten Vertiefungen.

Die Dokumente US 2004/0032566 A und EP-A-1645904 offenbaren ein Verfahren zum Herstellung einer dauerhaften Markierung in einem Optikelementen worin ein Markierungsbereich mit Laserstrahlung bestrahlt wird.

### ZUSAMMENFASSUNG DER ERFINDUNG

Es ist eine Aufgabe der Erfindung, ein insbesondere zur Markierung von Brillenlinsen, Kontaktlinsen oder Intraokularlinsen geeignetes Lasermarkierungsverfahren bereitzustellen, mit dem relativ kostengünstig hochpräzise, dauerhafte, oberflächennahe Markierungen an Optikelementen aus im sichtbaren Spektralbereich transparenten Materialien erzeugt werden können.

Zur Lösung dieser Aufgabe stellt die Erfindung ein Verfahren mit den Merkmalen von Anspruch 1 bereit und schlägt die Verwendung einer Vorrichtung mit den Merkmalen von Anspruch 11 vor. Weiterhin wird ein Optikelement mit den Merkmalen von Anspruch 15 bereitgestellt.

Vorteilhafte Weiterbildungen sind in den abhängigen Ansprüchen angegeben. Der Wortlaut sämtlicher Ansprüche wurde unter Bezugnahme zum Inhalt der Beschreibung gemacht.

Bei dem Verfahren wird ein Markierungsbereich des Optikelementes mit Laserstrahlung zur Erzeugung von lokalen, oberflächennahen Materialveränderungen derart bestrahlt, dass eine Markierung vorgebbarer Form und Größe entsteht. Die Laserstrahlung hat eine Arbeitswellenlänge λ aus dem Wellenlängenbereich zwischen 1,1 µm und 9,2 µm. Dabei wird eine Arbeitswellenlänge verwendet, für die das Material des Optikelementes eine Teilabsorption mit einem Transmissionsgrad zwischen 60% und 98% zeigt. Die Arbeitswellenlänge wird also in Abhängigkeit vom Material so gewählt, dass dieses nicht stark absorbiert, sondern im Gegenteil eine relativ hohe Transmission zeigt.

Untersuchungen der Erfinder haben gezeigt, dass es günstig sein kann, für die Bearbeitung eines bestimmten Materials Laserstrahlung mit einer Arbeitswellenlänge zu verwenden, für die das Material weder vollständig transparent, noch sehr stark absorbierend ist, sondern lediglich eine gewisse Teilabsorption aufweist. Es hat sich insbesondere als günstig herausgestellt, wenn das Transmissionsvermögen bzw. der Transmissionsgrad des bestrahlten Materials für die verwendete Laserstrahlung zwischen ca. 60% und ca. 98%. Unter diesen Bedingungen ist ein vorteilhafter Kompromiss zwischen der optischen Eindringtiefe der Laserstrahlung in das Material (begünstigt durch niedrige Absorption) und der für die angestrebte Materialveränderung erforderlichen Absorption gegeben, so dass auch bei nicht zu hoher Ausgangsleistung einer Laserstrahlungsquelle im Material die für die Materialmodifizierung erforderliche Schwellfluenz (Grenz-Leistungsdichte für die Erzeugung einer irreversiblen (bleibenden), optisch erkennbaren Materialveränderung) erreicht werden kann.

Bei manchen Verfahrensvarianten liegt der Transmissionsgrad des bestrahlten Materials für die Arbeitswellenlänge zwischen ca. 75% und ca. 95%.

Gemäß einer anderen Formulierung wird die Verwendung eines Lasers mit einer Arbeitswellenlänge λ aus einem Wellenlängenbereich zwischen 1,1 µm und 9,2 µm als Lichtquelle für eine Lasermikrobearbeitungsvorrichtung zur Markierung von Brillenlinsen und anderen Optikelementen vorgeschlagen, die im Wesentlichen aus einem im sichtbaren Spektralbereich transparenten Material bestehen, wobei eine Arbeitswellenlänge verwendet wird, für die das Material des Optikelementes eine Teilabsorption mit einem Transmissionsgrad zwischen 60% und 98% zeigt.

Der Begriff "Markierung" bezeichnet in dieser Anmeldung allgemein eine oberflächennahe Strukturierung, die mit bloßem Auge oder mit Hilfe geeigneter optischer Hilfsmittel, z.B. einer Lupe oder einem Mikroskop, sichtbar ist. Die Begriffe "Markierung" und "Strukturierung" werden daher gelegentlich synonym verwendet.

Die Laserbearbeitung mit Arbeitswellenlängen aus dem Wellenlängenbereich zwischen 1,1 µm und 9,2 µm hat gegenüber den herkömmlich verwendeten Wellenlängenbereichen aus dem tiefen Ultraviolett oder aus dem mittleren Infrarotbereich zahlreiche Vorteile. Zum einen ist erkannt worden, dass viele der für Brillenlinsen, Kontaktlinsen, Intraokularlinsen und andere transparente Optikelemente verwendeten Materialien in diesem Wellenlängenbereich spektrale Bereiche günstiger Teilabsorption haben, so dass bei geeigneter Wahl der Arbeitswellenlänge bereits relativ kleine eingestrahlte Leistungsdichten ausreichen können, um eine dauerhafte laserinduzierte Materialveränderung im Material herbeizuführen. Da unter diesen Bedingungen die laserinduzierte Materialveränderung im Material des Optikelementes eṙzeugt wird, kann auf die Verwendung von Hilfsschichten zur Erhöhung der oberflächennahen Absorption verzichtet werden.

Zweitens können Laserbearbeitungssysteme mit relativ einfachem Aufbau genutzt werden. Dies ist insbesondere gegenüber herkömmlich verwendeten Excimerlasern vorteilhaft. Excimerlaser haben u.a. den Nachteil, dass das Gasmedium in regelmäßigen Abständen erneuert werden muss und die Leistung nach einer Neubefüllung monoton abfällt, was eine kontinuierliche Leistungsmessung und Regelung erfordert, um mit konstanten Leistungsdichten Markierungen aufbringen zu können. Darüber hinaus wird die Strahlung von Ultraviolett-Lasern bei kurzen Wellenlängen, beispielsweise bei 193 nm, an Luft absorbiert, so dass konstruktiver Aufwand getrieben werden muss, um den Strahlengang durch ein Schutzgas (vgl. z.B. DE 10 2004 004 514 A1) oder im Vakuum zu führen. Hinzu kommt, dass Excimerlaser gepulste Laser mit typischen Repetitionsraten im Bereich einiger 100 Hz sind, was die Produktivität begrenzt. Bei Verzicht auf Excimerlaser können daher Aufwand und Investitionskosten eingespart werden.

Auch im Vergleich zu den herkömmlich verwendeten CO₂-Laser ergeben sich erhebliche Vorteile. Zwar tritt bei CO₂-Lasern kein stetiger Leistungsabfall auf, weil das Lasergas kontinuierlich erneuert wird. Beim Einsatz von CO₂-Lasern für Markierungsaufgaben im oberflächennahen Bereich von im optischen Spektralbereich transparenten Materialien wurde jedoch als Nachteil erkannt, dass die emittierte Ausgangsleistung um bis zu 5% um einen Mittelwert schwanken kann, was Probleme bei der Einhaltung und Einstellung vorgegebener Modifikationsdimensionen zur Folge haben kann, da in der Regel die Anzahl der Pulse zum Erreichen einer gegebenen Materialveränderung unter der Annahme einer konstanten Emissionscharakteristik berechnet wird.

Die Verwendung von Arbeitswellenlängen aus dem mittleren Infrarotbereich, wie sie von CO₂-Lasern abgegeben werden, können auch im Hinblick auf eine eventuell gewünschte Miniaturisierung von Markierungsstrukturelementen nachteilig sein, da die Dimensionen der minimal erzeugbaren Strukturen vom optischen Auflösungsvermögen Δx bestimmt werden, welches wiederum über den funktionalen Zusammenhang Δx=0,61*λ/NA mit der Arbeitswellenlänge λ und der numerischen Apertur NA zusammenhängt. Unter typischen Strahlführungsbedingungen kann somit bei Arbeitswellenlängen jenseits von 9,2 µm eine Auflösung von besser als ca. 6 µm nicht erreicht werden. Werden dagegen deutlich kürzere Arbeitswellenlängen aus dem Infrarotbereich genutzt, sind Markierungen mit feineren Strukturen und/oder sehr randscharfe Markierungen möglich.

Vorzugsweise liegt die Arbeitswellenlänge im unteren Teil des angegebenen Wellenlängenbereiches, wobei die Laserstrahlung beispielsweise eine Arbeitswellenlänge aus dem Wellenlängenbereich zwischen 1,5 µm und 5,0 µm haben kann. Als Auswahlkriterium kann insbesondere das Absorptionsvermögen des lokal zu verändernden Materials bei der entsprechenden Wellenlänge herangezogen werden. Wenn die Emissionswellenlänge aus dem unteren Teil des Spektralbereichs stammt, ergibt sich eine im Vergleich zu CO₂-Laserwellenlängen deutlich verbesserte Fokussierbarkeit, wodurch als Markierung geeignete Strukturen mit feineren bzw. kleineren Strukturelementen ermöglicht werden. Auch im Hinblick auf die Arbeitssicherheit sind Arbeitswellenlängen von mehr als ca. 1,4 µm vorteilhaft, da Einrichtungen zum Augenschutz weniger aufwändig sein können als bei niedrigeren Wellenlängen, weil z.B. Netzhautschädigungen kaum noch zu befürchten sind.

Besondere Vorteile können sich ergeben, wenn das Material des Optikelementes ein Kunststoffmaterial ist, d.h. ein synthetisches Polymermaterial. Das Kunststoffmaterial kann z.B. Polycarbonat (PC), Polymethylmethacrylat (PMMA), ein ggf. wasserhaltiges Acryl (insbesondere für Intraokularlinsen) oder ein anderes unter Gesichtspunkten des Gebrauchs als Brillenglas geeignetes Polymer sein.

Nach Untersuchungen der Erfinder hat beispielsweise der Kunststoff Polycarbonat (PC) im Wellenlängenbereich zwischen ca. 1,5 µm und ca. 5 µm eine Teilabsorption mit einem Transmissionsvermögen zwischen ca. 75% und ca. 98% Transmissionsgrad und kann daher sehr effizient mit Wellenlängen aus dem nahen Infrarotbereich modifiziert werden. Polymethylmethacrylat (PMMA) hat im gleichen Wellenlängenbereich eine geringfügig niedrigere Transmission, wobei der Transmissionsgrad zwischen ca. 70% und ca. 98 % liegen kann. Bei Verwendung anderer im sichtbaren Spektralbereich transparenter Kunststoffmaterialien können sich in Abhängigkeit von der Brechzahl des Materials ähnliche Verhältnisse ergeben, wobei beispielsweise der Transmissionsgrad zwischen ca. 55 % und ca. 80 % bis 98 % liegen kann.

Die Bestrahlungsparameter können so eingestellt werden, dass sich im bestrahlten Bereich ein Materialabtrag (Ablation) ergibt, so dass oberflächennahe Vertiefungen vorgebbarer Form und Tiefe entstehen.

Eine besondere Verfahrensvariante zeichnet sich demgegenüber dadurch aus, dass das Optikelement zumindest im zu modifizierenden Bereich aus einem Kunststoffmaterial besteht und dass Strahlparameter der Laserstrahlung derart eingestellt werden, dass im bestrahlten oberflächennahen Bereich eine laserinduzierte Volumenvergrößerung erzeugt wird. Die erzeugten Strukturelemente einer Markierung sind dann gegenüber den angrenzenden, nicht bestrahlten Bereichen erhaben. Es hat sich gezeigt, dass sich unter gewissen Bestrahlungsbedingungen ein Materialabtrag völlig vermeiden lässt, so dass keine Abtragsprodukte ("debris") entstehen, welche die markierte Oberfläche verschmutzen können. Es wird zurzeit davon ausgegangen, dass das Kunststoffmaterial unter dem Einfluss der eingestrahlten Laserstrahlung aufquillt und/oder ggf. auch teilweise aufschmilzt und nach Abschluss der Bestrahlung wieder erstarrt, so dass sich im oberflächennahen Bestrahlungsbereich eine Zone verringerter Dichte bzw. größeren Volumens als vor der Bestrahlung ergibt. Diese Verfahrensvariante kann daher als "Laserquellen" oder "Laserexpansion" bezeichnet werden.

Wird die eingestrahlte Leistungsdichte geeignet begrenzt (z.B. durch Begrenzung der Zahl von Pulsen), so kann der bestrahlte Bereich eine weitgehend unverletzte Oberfläche behalten, die sich nach Art einer Haut glatt und kontinuierlich gekrümmt über den volumenvergrößerten Bereich spannt. Auf diese Weise kann in einem bestrahlten Bereich ein Linsenelement mit einer konvexen Linsenoberfläche erzeugt werden.

Werden zeitlich parallel zueinander und/oder sequentiell viele nebeneinander liegende Bestrahlungsbereiche bestrahlt, so kann ein eindimensionales oder ein zweidimensionales Mikrolinsenarray mit einer Vielzahl in einer Rasteranordnung nebeneinander liegender erhabener Strukturelemente gebildet werden, die jeweils eine Linse des Mikrolinsenarrays bilden.

Die erhabenen Strukturelemente können an der unbeschichteten Oberfläche eines Optikelements erzeugt werden. Das strukturierte bzw. markierte Optikelement kann danach bei Bedarf beschichtet werden, z.B. mit einer Antireflexbeschichtung und/oder mit einer Verschleißschutzschicht, um die Kratzfestigkeit zu erhöhen. Vorteilhafterweise ist es jedoch auch möglich, dass das Optikelement zunächst mit einer den zu strukturierenden Bereich überdeckenden Beschichtung (z.B. Antireflexbeschichtung und/oder Verschleißschutzschicht) versehen wird und dass danach die erhabene laserinduzierte Markierung bzw. Strukturierung durch die Beschichtung hindurch erzeugt wird. Bei geeigneter Wahl der Bestrahlungsparameter ist es hierbei möglich, dass sich die erhabenen Strukturelemente bilden, ohne dass die Beschichtung rissig wird oder abplatzt. Die Beschichtung sollte für diese Variante aus einem oder mehreren Materialien bestehen, die einerseits für die Arbeitswellenlänge der Laserstrahlung transparent bzw. weitgehend absorptionsfrei sind, damit sich die Beschichtung während der Strukturierung bzw. Markierung nicht zu stark aufheizt, und andererseits eine Modifikations-Schwellfluenz aufweisen, die deutlich über der des Substratmaterials liegt. Diese Eigenschaftskombination wird häufig bei der Beschichtung von Kunststoffsubstraten mit anorganischen Schichten oder Schichtsystemen beobachtet.

Bei manchen Ausführungsformen haben die erhabenen Strukturelemente der Markierung relativ zur unbestrahlten Umgebung eine Höhe, die in der Größenordnung von Einhundert oder mehreren Hundert Nanometern liegen kann, z.B. im Bereich von ca. 0,5 µm bis ca. 5 µm oder mehr. Solche Strukturelemente können bei geeignet eingestellter lateraler Ausdehnung als fast unsichtbare oder aber als sichtbare Markierungen und/oder als Linsenelemente dienen. Der Durchmesser bzw. die laterale Ausdehnung liegt typischer Weise im Bereich zwischen ca. 10 µm und 500 µm, insbesondere zwischen ca. 20 µm und 100 µm, kann jedoch bei Bedarf auch darüber oder darunter liegen.

Die Materialmodifizierung kann mit einer gepulsten Laserstrahlungsquelle durchgeführt werden, die eine Repetitionsrate im kHz-Bereich hat, wobei die Repetitionsrate z.B. zwischen 2 kHz und 80 kHz liegen kann. Diese Repetitionsraten liegen deutlich über den mit Excimer-Lasern erreichbaren Pulswiederholungsraten, die normalerweise im Bereich von 100 Hz bis maximal 500 Hz liegen. Dadurch sind ggf. höhere Bearbeitungsraten (Einzelmarkierung pro Zeiteinheit) und damit eine verbesserte Produktivität erzielbar.

Eine Markierung kann mittels Direktstrukturierung oder Maskenprojektionsverfahren erzeugt werden. Bei der Direktstrukturierung (die auch als Fokusabtrag bezeichnet werden kann) wird ein in einem Fokusbereich fokussierter Laserstrahl erzeugt. Der Markierungsbereich des zu bestrahlenden Optikelementes wird mit dem im Markierungsbereich fokussierten Laserstrahl zur Erzeugung von lokalen, oberflächennahen Materialveränderungen bestrahlt. Dabei wird eine Relativbewegung zwischen dem Optikelement und dem Fokusbereich des Laserstrahls erzeugt, so dass der Fokusbereich nacheinander unterschiedliche Orte des Optikelements bestrahlt und auf diese Weise eine Markierung vorgebbarer Form und Größe erzeugt wird. Dieses sequentielle Verfahren ist sehr flexibel, so dass bei geringem Aufwand unterschiedliche Markierungen erzeugt werden können. Der Laserstrahl kann bei Bedarf in einem Fokusbereich mit einem Durchmesser von weniger als 20 µm fokussiert werden, wodurch sehr feine Strukturen erzeugt werden können.

Beim Maskenprojektionsverfahren wird im Strahlengang im Bereich der Objektebene einer Abbildungsoptik eine strahlformende Maske eingebracht, die mit Hilfe der Abbildungsoptik in verkleinerndem Maßstab in die Bildebene der Abbildungsoptik projiziert wird. Dabei entsteht in der auch als Maskenprojektionsebene bezeichneten Bildebene ein scharfes, verkleinertes Abbild der Maskenstruktur. Hat beispielsweise die Maske eine einzige kreisrunde Ausnehmung, so hat der Laserstrahl einen entsprechend kleineren kreisrunden Strahlquerschnitt in der Maskenprojektionsebene. Durch Erzeugung einer Relativbewegung zwischen dem Optikelement und dem auf seine Oberfläche projizierten Laserstrahl kann analog zur Direktstrukturierung eine Markierung durch sequentielle Bestrahlung unterschiedlicher Orte des Markierungsbereichs erzeugt werden. Mit Hilfe des Maskenprojektionsverfahrens ist häufig eine effizientere Ausnutzung der primären Strahlungsenergie des Lasers möglich, da die Strahlungsenergie bei Bedarf auf größere Bereiche, beispielsweise mit Durchmessern zwischen 50 µm und 100 µm projiziert werden kann, wodurch randscharfe Markierungsstrukturen erzeugbar sind, die ohne Hilfsmittel auch mit dem bloßen Auge noch sichtbar sein können. Mit dem Maskenprojektionsverfahren ist es auch möglich, bei Verwendung komplexerer Masken eine komplexere Markierung, ggf. mit mehreren Strukturelementen, mit einem einzigen Laserpuls oder wenigen Laserpulsen in der Objektoberfläche zu erzeugen.

Die räumliche laterale Ausdehnung und Verteilung der Materialveränderungen ist somit durch geeignete Strahlprofileinstellung in weiten Grenzen einstellbar. Beispielsweise können beim Maskenprojektionsverfahren Masken mit runden oder polygonalen oder andersartig geformten Ausnehmungen unterschiedlicher Form und Größe verwendet werden. Auch die Anzahl von Ausnehmungen kann variiert werden, es können eine oder mehrere Ausnehmungen pro Maske vorgesehen sein. Für die Herstellung von Mikrolinsenarrays können z.B. Masken mit einer Rasteranordnung geeignet dimensionierter Ausnehmungen verwendet werden, um zeitlich parallel eine Vielzahl von Mikrolinsen zu erzeugen.

Alternativ oder zusätzlich zu einer genauen Vorgabe der Querschnittsform des Laserstrahls wird bei manchen Verfahrensvarianten eine Intensitätsverteilung der Laserstrahlung innerhalb des Laserstrahls durch Strahlformung beeinflusst. Zu dieser energetischen Strahlformung wird vorzugsweise eine Strahlformungseinrichtung mit mindestens einem Strahlformungselement verwendet, das aus der Gruppe: Konturmaske, Grautonmaske, Refraktives optisches Element (ROE) und Diffraktives optisches Element (DOE) ausgewählt ist. Ein zur Durchführung dieser Verfahrensvariante geeignetes Lasersystem hat somit eine solche Strahlformungseinrichtung.

Die gezielte Einstellung der Intensitätsverteilung im Laserspot kann beispielsweise dazu genutzt werden, sanftere Übergänge zwischen dem bestrahlten Bereich einer Markierung und benachbarten unbestrahlten Bereichen des Optikelementes zu erreichen. Solche sanfteren Übergänge können beispielsweise die Markierung durch eine Beschichtung hindurch vereinfachen und verbessern, weil bei Erzeugung sanfterer bzw. glatterer, annähernd oder vollständig kontinuierlicher Übergänge zwischen bestrahlten und unbestrahlten Bereichen die Neigung der Beschichtung zum Abplatzen reduziert wird. Die durch die partielle Absorption der Laserstrahlung erzeugte Volumenvergrößerung kann dadurch ohne scharfen Übergang an die umgebenden, nicht bestrahlten Bereiche anschließen, so dass Strukturen mit hohen Raumfrequenzen, wie sie normalerweise bei Laserablationsprozessen beobachtet werden, besser ausgeglichen werden.

Die Verwendung einer als Konturmaske ausgelegten Transmissionsmaske ist eine in der Regel besonders einfache und ökonomische Maßnahme zur aktiven Beeinflussung des energetischen Strahlprofils. Eine Transmissionsmaske besteht nur aus völlig transparenten und völlig strahlungsundurchlässigen (opaken) Abschnitten der Maske. Während jedoch eine herkömmliche Transmissionsmaske ein rechteckförmiges Transmissionsprofil mit scharfem Übergang am Rande des Lochs bzw. des transparenten Bereiches der Maske hat, können die Randbereiche des voll transmittierenden Bereiches zum Beispiel durch gezackte Strukturen oder durch weitere durchlässige Bereiche unterschiedlicher räumlicher Dichte und/oder Größe so gestaltet werden, dass sich ein wesentlich sanfterer Übergang zwischen Bereichen voller Transmission und Bereichen voller Strahlblockung ergibt. Grautonmasken sind in der Regel in der Herstellung etwas komplizierter, erlauben jedoch bei Bedarf die Einstellung aller Transmissionswerte zwischen 100 % und 0 % über den Querschnitt des beeinflussten Strahlquerschnitts. Grautonmasken und Transmissionsmasken können selbstverständlich auch kombiniert werden, um eine gewünschte Intensitätsverteilung im Laserspot am Werkstück zu erhalten.

Bei Verwendung eines oder mehrerer refraktiver optischer Elemente (ROE) in der Strahlformungseinrichtung kann das Intensitätsprofil des Laserstrahls durch gezielte Brechung des Laserstrahls beeinflusst werden, um beispielsweise aus einem Gauß-förmigen energetischen Strahlprofil auf refraktivem Wege und ohne Transmissionsverluste ein Top-Hat-Profil zu erzeugen. Eine Strahlformungseinrichtung kann auch ein oder mehrere diffraktive optische Elemente (DOE) zur aktiven Beeinflussung der Intensitätsverteilung innerhalb des Laserstrahls enthalten. Mit Hilfe eines entsprechend ausgelegten diffraktiven optischen Elementes können beispielsweise auf einfache Weise rechteckige oder andere polygonale Strahlquerschnittsformen am Optikelement erzielt werden. Es ist auch möglich, auf diffraktivem Wege relativ komplexe Muster, wie beispielsweise Buchstaben, Zahlen oder andere Zeichen zu erzeugen.

Die Lasermarkierung mit Hilfe solcher Strahlformungselemente kann stationär oder kinematisch durchgeführt werden.

Bei einer stationären Vorgehensweise kann beispielsweise das Intensitätsprofil im Laserstrahl so geformt werden, dass es ringförmig ist. Im Unterschied zu einem Gauß-förmigen Strahlintensitätsprofil kann eine ringförmige Intensitätsverteilung beispielsweise dazu benutzt werden, konkave Mikrolinsen in quellfähigen Optikmaterialien, beispielsweise Kunststoffen, zu erzeugen.

Die kinematische Vorgehensweise nutzt ein gegebenes Strahlprofil und das Optikelement wird kontinuierlich bestrahlt, während eine Relativbewegung zwischen dem Laserstrahl und dem Optikelement erzeugt wird. Auf diese Weise kann eine vorgegebene einfachere Intensitätsverteilung im Laserstrahl in eine zweidimensionale ausgedehnte Markierungsstruktur umgesetzt werden, beispielsweise in Form einer Mikrorampe. Im Rahmen einer kinematischen Bearbeitung ist es möglich, das Laserstrahlprofil während der Relativbewegung ortsund/oder zeitabhängig zu verändern, indem beispielsweise die Breite und Höhe einer motorisch angetriebenen rechteckigen verstellbaren Maske synchron mit der Bearbeitung entlang einer Bearbeitungstrajektorie verändert werden. Beispielsweise kann die Maske vor Beginn einer Bearbeitungsspur völlig geschlossen sein und zu Beginn des Markierungsprozesses langsam geöffnet werden, danach eine Weile geöffnet bleiben und gegen Ende der Bearbeitung allmählich oder schnell geschlossen werden. Es ist also eine hohe Flexibilität der Markierung von Optikelementen möglich.

Arbeitswellenlängen aus dem Wellenlängenbereich zwischen 1,1 µm und 9,2 µm, insbesondere aus dem unteren Teil dieses Spektralbereiches bis beispielsweise maximal 5.000 nm (5 µm), können beispielsweise durch den Einsatz eines in diesen Spektralbereich emittierenden Festkörperlasers oder durch die Veränderung der Wellenlänge eines bei einer gewissen Wellenlänge emittierenden "seed lasers" mittels eines optisch-parametrischen Verstärkers (OPA) oder durch die Verwendung eines optisch-parametrischen Oszillators (OPO) erreicht werden.

Besondere Vorteile ergeben sich, wenn als Laserstrahlungsquelle ein Faserlaser verwendet wird. Faserlaser weisen u.a. eine hervorragende Strahlqualität (typisch: M²=1,05 bis 1,1) auf, was vor allem der Fokussierbarkeit und damit der Qualität und Reproduzierbarkeit der Markierung zu Gute kommt. Außerdem haben sie eine langzeitstabile Emissionscharakteristik, sind kompakt und für den industriellen Einsatz damit bestens geeignet.

Bei einer Ausführungsform wird ein Thulium-dotierter Faserlaser verwendet, dessen typische Arbeitswellenlänge im Bereich von ca. 2 µm bzw. geringfügig darunter liegt, insbesondere im Bereich zwischen ca. 1,75 µm und ca. 2,1 µm. Es kann z.B. auch ein Erbium-dotierter Faserlaser oder ein Holmium-dotierter Faserlaser verwendet werden. Es hat sich herausgestellt, dass viele für Brillenlinsen, Kontaktlinsen oder Intraokularlinsen verwendete Materialien, z.B. Polycarbonat (PC) oder PMMA oder ein anderes Acrylmaterial, im Spektralbereich dieser Laser eine für die Lasermarkierung günstige Teilabsorption haben, z.B. mit Transmissionsgraden zwischen ca. 60% und ca. 98%.

Zur Durchführung des Verfahrens können allgemein beispielsweise folgende Laserstrahlungsquellen verwendet werden:
ein Ho-YAG-Laser (Holmium-YAG-Laser) mit Arbeitswellenlänge bzw. Emissionswellenlänge von ca. 2,1 µm,
ein Ho-Laser mit Arbeitswellenlänge zwischen ca. 2,05 µm und 2,1 µm,
ein Tm-Laser (Thulium-Laser), beispielsweise ein Tm-YAG-Laser, mit ca. 2,01 µm Arbeitswellenlänge,
ein Er-YAG-Laser (Erbium-YAG-Laser) mit Arbeitswellenlänge von ca. 2,94 µm,
ein Er³⁺:CaWO₄-Laser mit Arbeitswellenlänge von ca. 1,61 µm,
ein Er³⁺: YAG-Laser mit Arbeitswellenlänge von ca. 1,64 µm bis ca. 2,94 µm,
ein Ho³⁺: YLF-Laser mit Arbeitswellenlänge von ca. 2,06 µm,
ein Ho³⁺: CaWO₄-Laser mit Arbeitswellenlänge von ca. 2,09 µm,
ein Tm³⁺: CaWO₄-Laser mit Arbeitswellenlänge von ca. 1,91 µm,
ein Tm³⁺: YAG-Laser mit Arbeitswellenlänge von ca. 2,01 µm,
ein Er³⁺-Faserlaser mit Arbeitswellenlänge von ca. 1,53 µm bis 1,6 µm,
ein Tm³⁺-Faserlaser mit Arbeitswellenlänge von ca. 1,75 µm bis 2,1µm oder optisch-parametrische Oszillatoren (OPO), die beispielsweise für Emissionswellenlängen λ=1,1 µm bis ca. λ= 4,0 µm arbeiten können.

Die Erfindung bezieht sich auch auf ein mit Hilfe des Verfahrens bzw. der Vorrichtung herstellbares oder hergestelltes Optikelement. Insbesondere handelt es sich dabei um ein Optikelement mit einem aus einem im sichtbaren Spektralbereich transparenten Kunststoffmaterial bestehenden Substrat, insbesondere um eine Brillenlinse, eine Kontaktlinse oder eine Intraokularlinse. Bei dem Optikelement kann es sich auch um ein folienartiges Substrat für Licht emittierende oder absorbierende Bauelemente handeln, z.B. für organische Leuchtdioden (OLEDs) oder Solarzellen. An einer optischen Oberfläche des Substrats ist ein Bereich mit einer Strukturierung bzw. Markierung vorgesehen. Das Optikelement ist **dadurch gekennzeichnet, dass** die Strukturierung durch laserstrahlungsinduzierte lokale Volumenvergrößerung erzeugte erhabene Strukturelemente aufweist.

An der Oberfläche des Substrats können mehrere in einer Rasteranordnung nebeneinander liegende erhabene Strukturelemente gebildet sein, die jeweils eine Linse eines Mikrolinsenarrays bilden.

Die vorstehenden und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei Ausführungsformen der Erfindung und auf anderen Gebieten verwirklicht sein und vorteilhafte sowie für sich schutzfähige Ausführungen darstellen können.

### KURZBESCHREIBUNG DER ZEICHNUNGEN

- Fig. 1: zeigt eine schematische Darstellung wesentlicher Komponenten einer Lasermarkierungsvorrichtung zur Markierung von Optikelementen mit Hilfe geeignet geformter Laserstrahlung;
- Fig. 2: zeigt Vergleichsdiagramme für die Abhängigkeit des Transmissionsgrades T von der Wellenlänge λ für verschiedene im sichtbaren Spektralbereich transparente Kunststoffmaterialien;
- Fig. 3: zeigt in 3A eine lichtmikroskopische Aufnahme einer laserinduzierten Markierung mit linienförmigen Strukturelementen und in 3B eine lichtmikroskopische Aufnahme einer laserinduzierten Markierung mit kreisförmigen Strukturelementen (dots) nach Bestrahlung mit 12 Pulsen (links) bzw. 13 Pulsen;
- Fig. 4: zeigt rasterelektronische Aufnahmen von punktförmigen bzw. kreisförmigen Strukturelementen auf einer optischen Oberfläche eines Kunststoff-Substrats nach Bestrahlung mit unterschiedlichen Anzahlen von Pulsen;
- Fig. 5: zeigt zwei rasterelektrodenmikroskopische Aufnahmen von durch Laserbestrahlung erzeugten linsenförmigen Strukturelementen auf einer optischen Oberfläche eines Kunststoff-Substrats; und
- Fig. 6: zeigt eine schematische Schnittdarstellung durch eine Reihe von Mikrolinsen eines Mikrolinsenarrays, dessen Einzellinsen durch lokale Bestrahlung eines Kunststoffsubstrats erzeugt wurden; und
- Fig. 7: zeigt eine Schnittdarstellung durch ein beschichtetes Substrat vor und nach einer Laserbestrahlung zur Erzeugung einer Mikrolinse.

### DETAILLIERTE BESCHREIBUNG DER BEVORZUGTEN AUSFÜHRUNGSFORMEN

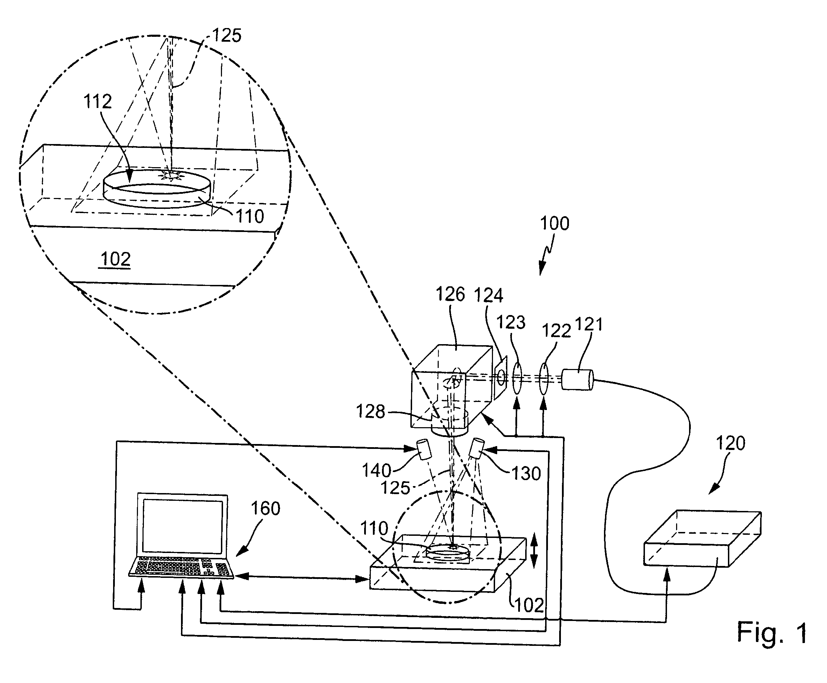

Fig. 1 zeigt eine schematische Darstellung wesentlicher Komponenten einer Vorrichtung 100 zur Markierung von Optikelementen mit Hilfe geeignet geformter Laserstrahlung. Die im Folgenden auch als Lasermarkierungsvorrichtung 100 bezeichnete Vorrichtung ist eine als Tischgerät ausgeführte Lasermikrobearbeitungsanlage, deren Komponenten speziell für die Anforderungen bei der Brillenlinsenmarkierung ausgelegt und aufeinander abgestimmt sind. Auch andere Optikelemente, z.B. Kontaktlinsen oder Gießformen für Kontaktlinsen, können markiert werden.

Auf einer nicht gezeigten, erschütterungsgedämpft gelagerten Maschinenbasis, beispielsweise einer Granitplatte, ist ein elektromotorisch in z-Richtung antreibbarer Hubtisch 102 montiert, der als Substrathalter zur Aufnahme mindestens eines Optikelements 110 (Substrat) auf seiner als Substrataufnahmefläche dienenden Oberseite dient.

Weiterhin hat die Vorrichtung 100 ein Lasersystem mit einer Laserstrahlungsquelle 120 und einem daran angebrachten Strahlführungssystem 124 zur Führung der Laserstrahlung und zur Erzeugung eines Laserstrahls 125, der auf eine nach oben gerichtete optische Fläche 112 des Optikelementes ausrichtbar ist.

Bei den im Folgenden näher dargestellten Versuchen kam ein weitgehend wartungsfreier und kostengünstiger Faserlaser 120 zum Einsatz. Es handelte sich dabei um einen nicht gütegeschalteten cw-Laser, dessen "Pulslänge" direkt über die Leistungsregelung des Lasers erzeugt wurde. Bei einer 5 kHz-Taktung wurden zur Erzeugung eines einzelnen Strukturelements ("dot") einer Markierung bis zu 20 Pulse erzeugt, was typische Bearbeitungsdauern in der Größenordnung von 4 ms für ein Strukturelement einer Markierung bedeutet.

Der mit Hilfe eines Strahlaufweiters 121 aufgeweitete Laserstrahl durchtritt einen rechnergesteuert betätigbaren Verschluss (Shutter) 122 sowie einen ebenfalls rechnergesteuert einstellbaren Abschwächer 123 und wird anschließend von der Spiegelanordnung eines Galvanometerscanners 126 in Richtung einer Fokussierungsoptik 128 umgelenkt, die bei der Direktstrukturierung den Laserstrahl auf einen Ort in einem Markierungsbereich der zu markierenden Oberfläche des Optikelementes fokussiert oder beim Maskenprojektionsverfahren ein Bild einer Maske in den Markierungsbereich projiziert. Wird - wie bei den hier dargestellten Versuchen - der Laser direkt zur Emission gebracht, kann auf den Verschluss und/oder auf den Abschwächer verzichtet werden. Wird eine Maske 124 verwendet, so ist diese in der Objektebene der Fokussierungsoptik 128 anzuordnen.

Die Fokussierungsoptik 128 ist als telezentrische f-Theta-Optik derart an den Auslenkbereich des Galvanoscanners und die Eigenschaften des eintreffenden Laserstrahles angepasst, dass der fokussierte Laserstrahl bzw. das scharfe Bild der Maske innerhalb eines flächig ausgedehnten Arbeitsbereiches auf der Substratoberfläche an jeder Fokussierungsposition die gleiche Strahleigenschaften besitzt. Die f-Theta Optik sorgt somit dafür, dass sich der Fokusbereich des ausgelenkten Laserstrahls nicht auf einer Kugelfläche bewegt, sondern auf einer Ebene. Mit Hilfe der Höhenverstellung des Hubtisches wird dieser für die Bearbeitung so positioniert, dass die Fokusebene oder die Maskenprojektionsebene mit der zu bestrahlenden Oberfläche zusammenfällt. Alternativ oder zusätzlich könnte der Scanner relativ zum Werkstück verfahren werden.

Zur Unterstützung einer exakten Strahlpositionierung bzw. der Fokussierung des Maskenabbildes auf der Substratoberfläche ist ein Beobachtungssystem vorgesehen, welches eine auf die Substratoberfläche ausrichtbare Flächenkamera 130 umfasst. Ein Positioniersystem zur exakten Positionierung des Substrats in Bezug auf den Laserstrahl umfasst einen Abstandssensor 140 zur exakten Lageerfassung der Substratoberfläche. Der Laserabstandssensor 140 wird bei dieser Ausführungsform im Zusammenhang mit einem automatischen Fokussierprozess genutzt. Es kann alternativ oder zusätzlich auch ein mechanischer (taktiler) Abstandssensor verwendet werden.

Mithilfe der Vorrichtung 100 kann ein Markierverfahren für eine Brillenlinse oder ein anderes Optikelement beispielsweise wie folgt durchgeführt werden.

Zunächst wird ein zu markierendes Optikelement auf den Hubtisch in einer Bearbeitungsposition abgelegt. Mit Hilfe des optischen Beobachtungssystems wird dann ein digitales Bild des abgelegten Optikelementes am Bildschirm der Steuer- und Bedieneinheit 160 erzeugt. Anhand dieses digitalen Bildes kann das zu markierende Objekt vom Bediener ausgerichtet und die relative Lage der zu erzeugenden Markierung bezogen auf Bezugspunkte kann definiert werden. Die nichtpermanenten Bezugspunkte können vorher z.B. in einem Druckverfahren mittels Tintenstrahl aufgebracht werden.

Danach wird eine automatische Fokussierungsprozedur durchlaufen, um das Optikelement in eine optimale vertikale Bearbeitungsposition zu bringen. Hierzu erfasst der Laserentfernungsmesser 140 (oder ein taktiler Abstandssensor) die Position der zu bearbeitenden Substratoberfläche und der Hubtisch 102 wird derart angesteuert, dass der vorgesehene Markierungsbereich des Optikelement in die optimale vertikale Bearbeitungsposition gebracht wird, auf die der Laserstrahl fokussiert bzw. projiziert werden kann. Es ist auch möglich, dass mehrere Positionen erfasst werden, z.B. bei Multifokallinsen. Hierzu wird beispielsweise die Linse lateral bewegt oder es wird der Sensor 140 gekippt. Es ist auch möglich, den Scanner mit Optik zu bewegen. Es kann dann eine flächige Interpolation zwischen den gemessenen Positionen durchgeführt werden, wodurch die Fokusposition für alle Stellen einer ggf. komplex gewölbten Oberfläche eines Optikelements ermittelbar ist.

Auf das Optikelement wird dann ein von der Laserstrahlungsquelle 120 erzeugter Laserstrahl 125 gerichtet, der ggf. durch den Strahlaufweiter 121 sowie den Abschwächer 123 hinsichtlich seiner absoluten Intensität sowie der Intensitätsverteilung so gestaltet wird, dass die für das Material des Optikelement spezifischen optimalen Bearbeitungsbedingungen eingestellt werden.

Mithilfe des Galvanometerscanners 126 erfolgt dann eine rechnergesteuerte Ablenkung des Laserstrahls mit hoher Dynamik und hoher Präzision. Dabei wird der Laserstrahl durch das f-Theta-Objektiv 128 auf den Markierungsbereich gerichtet. Mithilfe eines Steuerrechners der Steuer- und Bedieneinheit 160 wird der Laserstrahl nun vom Galvanometerscanner 126 auf die einer Markierung nach Vorgabe entsprechende Position gerichtet und es wird durch Ansteuerung des Lasers oder des Shutters ein Laserpuls geeigneter Länge ausgelöst. Über die Bedienoberfläche der Steuer- und Bedieneinheit wurden zuvor auch relevanter Parameter wie die Pulsrepetitionszahl und die Intensität der Laserstrahlung eingegeben und für den Prozess festgelegt. Die Intensität kann beispielsweise über Einstellung des Abschwächers 123 oder - wie bei dem Versuchslaser - durch Wahl der Pulsenergie direkt am Laser vorgegeben werden. Entsprechend den Vorgaben für die in dem Optikelement zu erzeugenden Markierung erfolgt dann eine rechnergesteuerte Auslenkung des Galvanometerscanners sowie ggf. eine Ansteuerung des Lasers 120, des Abschwächers 123 oder des Shutters 122, um im zeitlichen Verlauf die zur Erzeugung der Markierung erforderliche Laserintensität bereitzustellen.

Der Galvanometerscanner kann auch bei Maskenprojektionsverfahren verwendet werden, beispielsweise wenn die Maske eine einzige kreisrunde oder andersartig geformte Aussparung hat, die mit Hilfe der als Projektionsoptik genutzten f-Theta-Optik auf die Oberfläche des Optikelementes abgebildet wird.

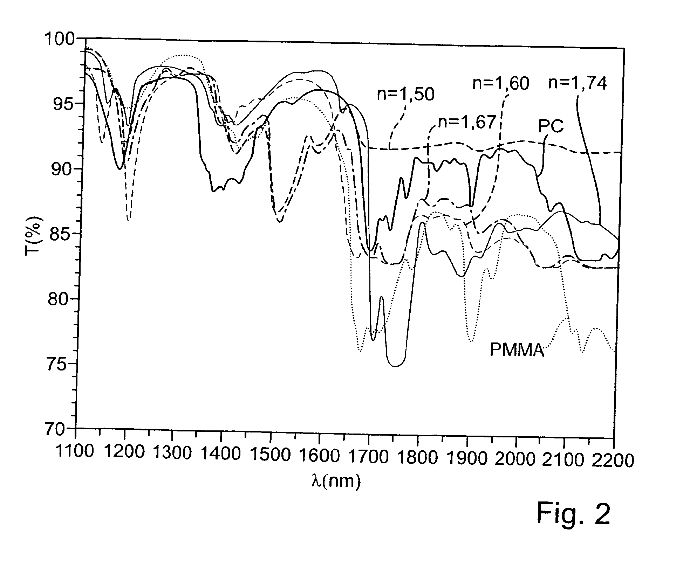

Es wurden Versuche an unterschiedlichen, für Brillenlinsen, Kontaktlinsen oder Intraokularlinsen üblichen Materialien durchgeführt. Fig. 2 zeigt in einem Vergleichsdiagramm die Transmissionsspektren verschiedener Materialien, d.h. die Abhängigkeit des Transmissionsgrades bzw. der Transmission T [%] von der Wellenlänge λ [nm] zwischen ca. 1.100 nm und 2.200 nm. Gezeigt sind die Transmissionsspektren von Polycarbonat (PC), Polymethylmethacrylat (PMMA), sowie von einem Kunststoffglas, das durch Variationen der Zusammensetzung mit unterschiedlichen Brechungsindices n verfügbar ist, beispielsweise mit n=1.50, n=1.60, n=1.67 und n=1.74.

Die in Fig. 2 angegebenen Transmissionsgrade T resultieren aus Messungen mit einem NIR (near infrared)-Spektromenter im sogenannten Transflexionsverfahren. Bei den Messungen wird ein Messstrahl mit Ausgangintensität I₀ nach einem ersten Durchdringen des transparenten Messobjekts an einer Spiegeloberfläche reflektiert und zurückgelenkt, so dass er das Messobjekt ein zweites Mal durchdringt. Der Transmissionsgrad T ergibt sich dann aus dem Verhältnis zwischen der Intensität I₁ nach zweifachem Durchtritt zur Ausgangsintensität gemäß T = I₁ / I₀. Die Spektren wurden auf eine effektive Materialgesamtdicke von 1 mm normiert.

Markierungsversuche wurden im Direktstrukturierungsverfahren durchgeführt. Dabei wurde als Laserstrahlungsquelle eine Thulium-dotierter Faserlaser mit Arbeitswellenlänge λ=1,908 µm verwendet, dessen Strahlung mittels einer f-Theta-Optik auf die Oberflächen der Proben fokussiert wurde, um auf der Probenoberfläche einen Bestrahlungsfleck mit ca. 30 µm bis 100 µm Durchmesser zu erzeugen. Die Laserpuls-Repetitionsrate lag im kHz-Bereich bei ca. 5 kHz. Bei allen bestrahlten Kunststoffmaterialien konnten nach kurzer Bestrahlungsdauer (typischer Weise weniger als 4 ms pro einzelnem Strukturelement) runde Strukturelemente der Markierung erzeugt werden, wobei die Art und die Dimensionen der Strukturelemente durch entsprechende Pulszahl eingestellt wurde.

Überraschenderweise lassen sich mit Arbeitswellenlängen im nahen Infrarotbereich hervorragend definierte Markierungen bzw. Strukturierungen vorgebbarer Form und Größe erzeugen, obwohl die bestrahlten Materialien im genutzten Wellenlängenbereich lediglich eine Teilabsorption mit Transmissionsgraden deutlich über 70% aufweisen, insbesondere zwischen ca. 80% für das höchstbrechende Kunststoffglas (n=1,74) bis nahezu 92% für das niedrig brechende Kunststoffglas (n=1,50). Auch Polycarbonat, das im fraglichen Wellenlängenbereich eine Transmission zwischen 85% und 90% aufweist, lässt sich hervorragend strukturieren.

Diese Ergebnisse bedeuten eine Abkehr von der kommerziellen Vorgehensweise, bei der versucht wurde, weit entfernt vom sichtbaren Spektralbereich im Bereich von Wellenlängen zu arbeiten, bei denen die bestrahlten Materialien eine sehr geringe Rest-Transmission von beispielsweise weniger als 30 % oder darunter haben. Es wird davon ausgegangen, dass bei Laserbearbeitung im Bereich der Teilabsorption, z.B. zwischen ca. 70% und ca. 95% (bei 1 mm Materialstärke), ein für die Strukturierung günstiger Kompromiss zwischen der optischen Eindringtiefe einerseits und der Möglichkeit zum Überschreiten der materialspezifischen Grenz-Fluenz (Modifikationsschwelle) andererseits erzielbar ist, um in einem effizienten Markierungsprozess Markierungen definierter Form und Größe zu erzeugen.

Eine weitere Besonderheit besteht darin, dass es im Rahmen der Erfindung bei Einhaltung gewisser Bedingungen für die Strahlformung und Strahlparameter möglich ist, an der Oberfläche transparenter Kunststoffmaterialien Strukturierungen mit Strukturelementen zu erzeugen, die gegenüber der unbestrahlten Umgebung erhaben sind, also nach oben über die unbestrahlte und damit nicht modifizierte Umgebung hinausragen. Dies bedeutet gegenüber der herkömmlichen Markierung durch Materialabtrag (Ablation) einen Paradigmenwechsel weg von einer ablatierenden Strukturierung hin zu einer materialaufwerfenden bzw. volumenvergrößernden Modifikation, die ohne Materialabtrag und damit auch ohne nachteilige Ablationsprodukte ("debris") durchgeführt werden kann.

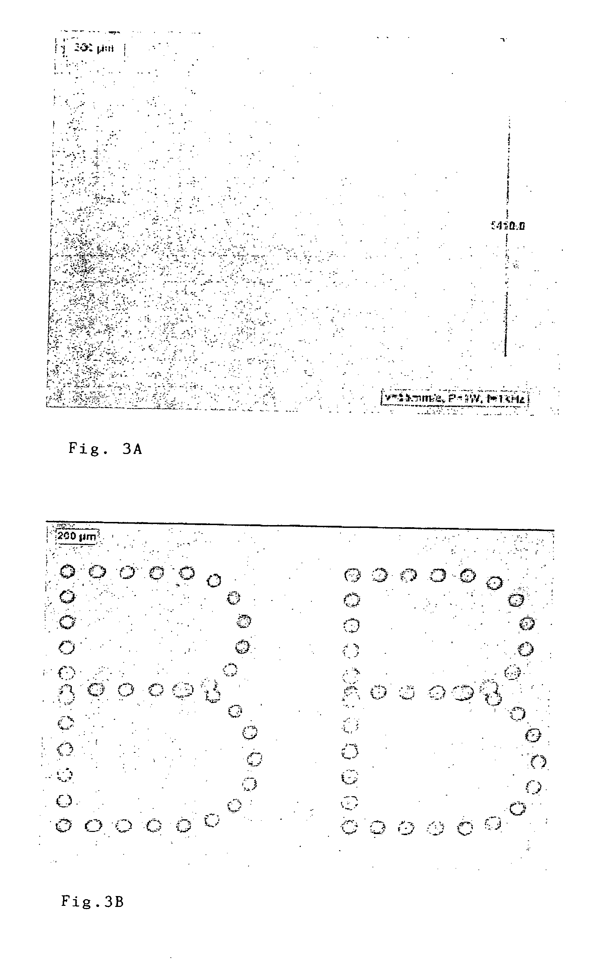

Anhand der Fig. 3 bis 5 werden Verfahrensweisen erläutert, mit denen aus Kunststoffmaterial bestehende Substrate für Optikelemente in einem Bereich definierter Größe derart mit Laserstrahlung bestrahlt werden, dass im bestrahlten oberflächennahen Bereich eine durch Laserstrahlung induzierte Volumenvergrößerung bzw. Dichteabnahme erzeugt wird, wobei diese laserinduzierte Volumenvergrößerung ohne Materialabtrag erfolgt. Auf diese Weise können im Markierungsbereich bzw. Strukturierungsbereich erhabene Strukturelemente erzeugt werden, die sich über die angrenzenden, nicht bestrahlten Bereiche erheben. Fig. 3A zeigt hierzu eine lichtmikroskopische Aufnahme eines Markierungsbereichs, bei dem die Markierung die Zahl "55" darstellt, wobei die beiden Ziffern jeweils in Form von kontinuierlich durchgezogen erscheinenden Linien vorliegen. Die linienförmigen Strukturelemente wurden bei einer Vorschubrate des Laserstrahls gegenüber dem Substrat von 55 mm/s erzeugt, wobei Laserstrahlung mit 1 Watt Ausgangsleistung und eine Pulsfrequenz von 1 kHz verwendet wurde.

Bei einer der zahlreichen möglichen Alternativen zeigt Fig. 3B zwei Markierungen, die jeweils den Buchstaben "B" darstellen, der jeweils durch Reihen von kreisförmigen bzw. punktförmigen Strukturelementen gebildet wird, die auch als "dots" bezeichnet werden. Das Substratmaterial ist hier ein transparenter Kunststoff mit Brechzahl n = 1.60. Für die Erzeugung des links gezeigten "B" wurden 12 Pulse verwendet, das rechts gezeigte "B" ergab sich nach 13 Pulsen und einer entsprechend größeren deponierten Laserleistungsdichte. Die lateralen Ausdehnungen der Strukturen (Linienbreite in Fig. 3A bzw. Durchmesser der Dots in Fig. 3B) beträgt in beiden Fällen zwischen ca. 50 µm und ca. 100 µm, so dass die Markierungen mit dem bloßen (unbewaffneten) Auge gerade noch sichtbar sein können.

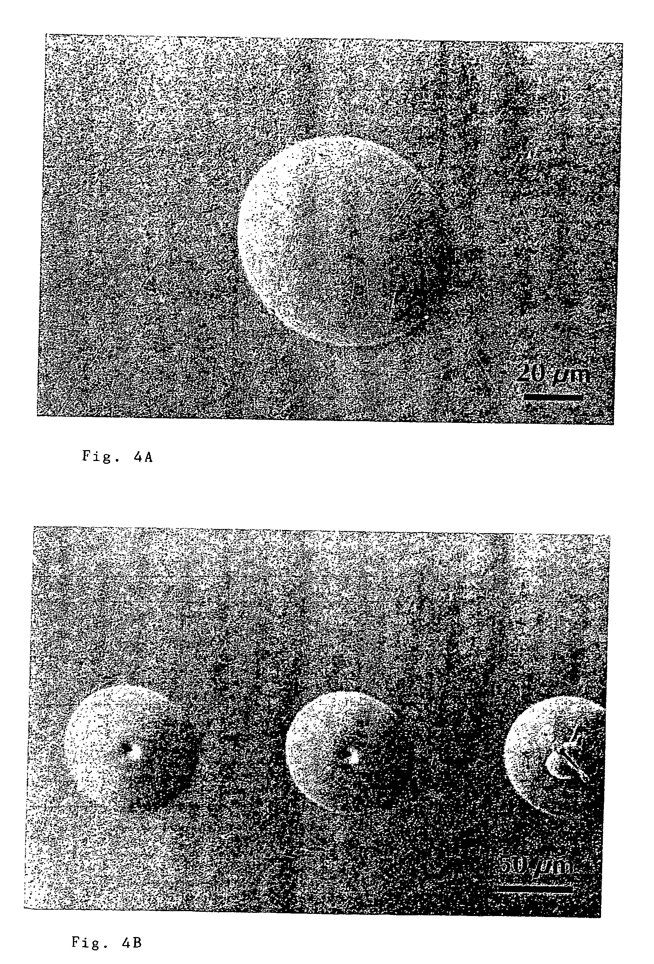

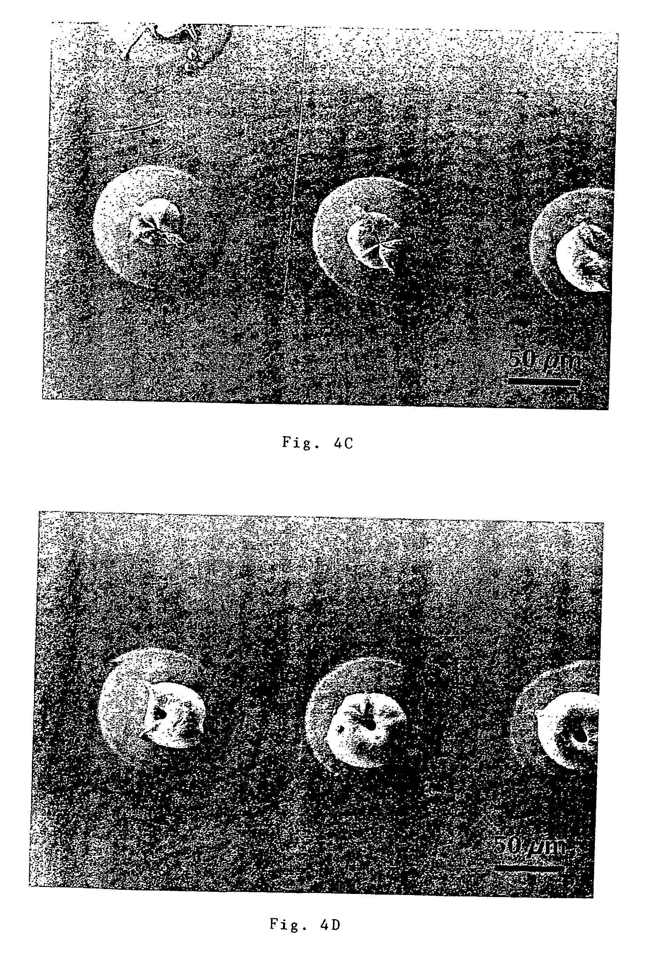

Auffällig bei den Dot-Strukturierungen in Fig. 3B ist vor allem, dass bei den rechts gezeigten runden Strukturelementen in deren Mitte jeweils dunkle Punkte erscheinen, die bei der linken Strukturierung nicht zu erkennen sind. Die Bedeutung dieses Phänomens wird anhand von Fig. 4 näher erläutert.

Fig. 4 zeigt rasterelektronenmikroskopische Aufnahmen von kreisförmigen Strukturelementen an der Oberfläche eines KunststoffSubstrats mit Brechungsindex n = 1,60 nach unterschiedlich langer Bestrahlungsdauer bzw. nach unterschiedlichen Anzahlen von Pulsen, nämlich nach 8 Pulsen in Fig. 4A, nach 12 Pulsen in Fig. 4B, nach 13 Pulsen in Fig. 4C und nach 14 Pulsen in Fig. 4D. In Fig. 4A ist erkennbar, dass sich an der optisch glatten Oberfläche des Kunststoffsubstrats ein erhabenes Strukturelement in Form einer konvexen Linse mit einem Durchmesser von ca. 80 µm gebildet hat. Die interferometrisch bestimmte Maximalhöhe der Linse im Zentralbereich beträgt ca. 4 µm. Die Oberfläche ist im bestrahlten Bereich jedenfalls bei der gezeigten hohen Auflösung unverletzt und krümmt sich kontinuierlich über dem darunter liegenden Bereich des Kunststoffmaterials. Diese oberflächennahe Zone hat offensichtlich während der Laserbestrahlung eine lokale Volumenvergrößerung erfahren, wodurch die nach oben gerichtete Wölbung entsteht, über die sich die Oberfläche nach Art einer glatten Haut spannt. Es wird angenommen, dass sich das Polymermaterial des Kunststoffes unter dem Einfluss der Laserstrahlung unter Dichteabnahme irreversibel verändert, so dass nach Abschluss der Bestrahlung die gezeigte Oberflächenlinse verbleibt. Ob und inwieweit das Kunststoffmaterial im bestrahlten Volumenbereich unterhalb der unversehrten Oberfläche teilweise aufschmilzt, ist Gegenstand aktueller Untersuchungen.

In Fig. 4B ist ersichtlich, dass sich an der Oberfläche der erhabenen Struktur bei weiterer Einstrahlung von Laserenergie kleine Löcher zu bilden scheinen, wobei an dem rechten Strukturelement zu erkennen ist, dass flüssiges Kunststoffmaterial aus einem zentralen Schlitz auf die Oberfläche dringt. Das Austreten von teilweise flüssigem Kunststoffmaterial aus einer oberflächlichen Öffnung im Zentrum des Strukturelementes mit zunehmender eingestrahlter Laserenergie ist aus den Fig. 4C und 4D gut zu erkennen. Bei der gewählten Pulsenergie und Pulsdauer liegt offenbar die Grenze der Bestrahlung, die zu einer noch unversehrten Oberfläche führt, zwischen 8 und 12 Pulsen (vgl. Fig.4A und Fig. 4B).

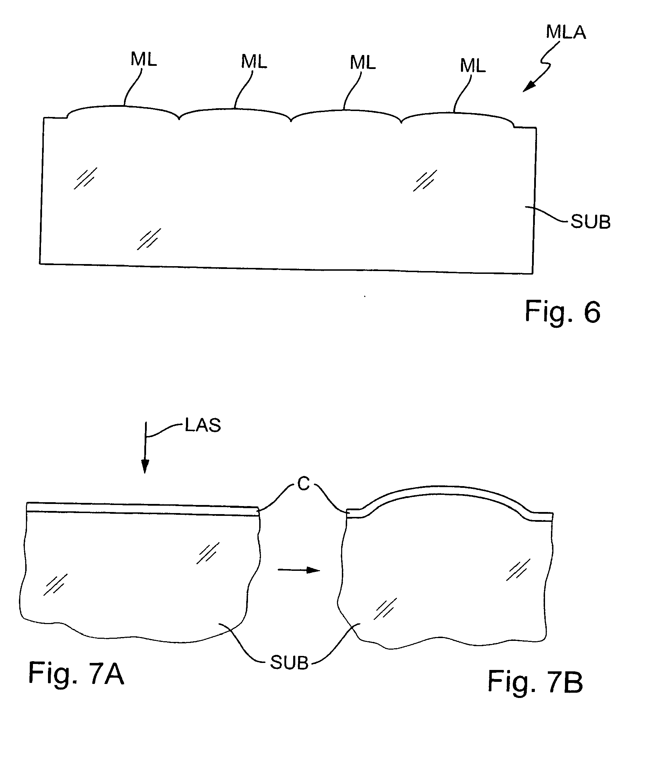

Alle in den Fig. 4A bis 4D gezeigten Strukturelemente sind für Markierungen hervorragend geeignet. Das in Fig. 4A gezeigte erhabene Strukturelement bildet eine konvexe Linse, die auch als mikrooptisches Element, nämlich als mikrooptische Positivlinse verwendet werden kann. Es ist ersichtlich, dass ein Kunststoffsubstrat auch in einer Vielzahl von nebeneinander liegenden Bestrahlungsbereichen derart bestrahlt werden kann, dass ein Mikrolinsenarray mit einer Vielzahl von nebeneinander liegenden erhabenen Strukturelementen gebildet wird, die jeweils eine Linse eines Mikrolinsenarrays bilden. Es kann sich dabei um ein eindimensionales Linsenarray mit einer geraden oder gekrümmten Linie einzelner Linsen handeln. Es ist auch möglich, die einzelnen Strukturelemente in einer zweidimensionalen Rasteranordnung mehr oder weniger flächenfüllend anzuordnen, um dadurch ein zweidimensionales Mikrolinsenarray zu bilden. Solche Optikelemente können beispielsweise zur Strahlhomogenisierung in Strahlführungssystemen eingesetzt werden (vgl. Fig. 6).

Durch geeignete Strahlformung des bei der Strukturierung genutzten Laserstrahls können auch Linsenelemente mit einer von der Kreisform abweichenden Form erzeugt werden, beispielsweise quadratische oder sechseckige oder andersartig polygonale Linsen. Es können auch Zylinderlinsen erzeugt werden.

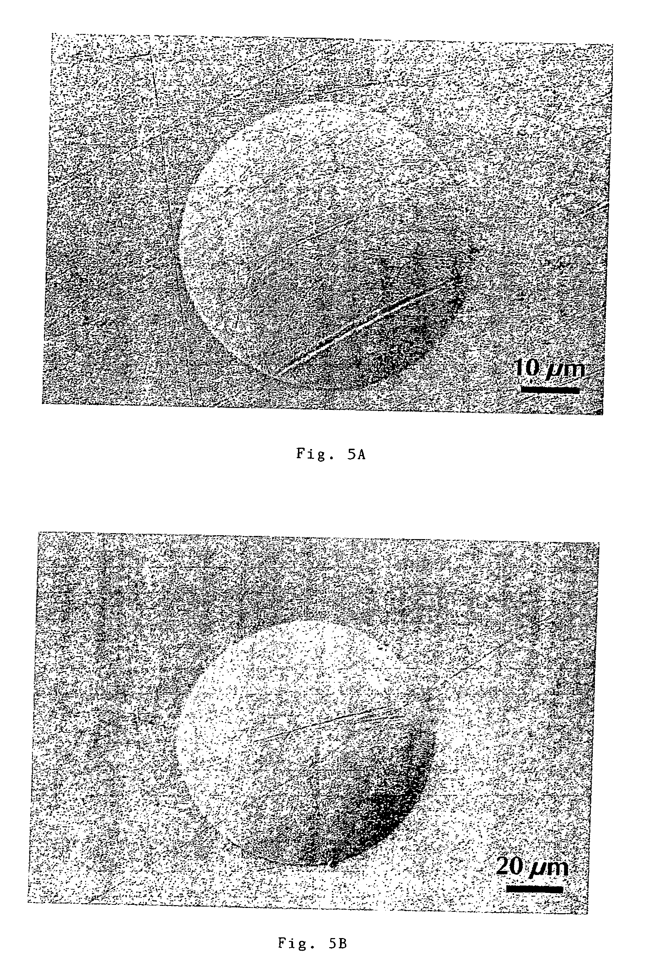

Die Fig. 5A, 5B dienen exemplarisch als Beleg dafür, dass auch andere Kunststoffmaterialien auf die gezeigte Weise zur Erzeugung von Linsenelementen strukturiert werden können. In diesem Beispielsfall besteht das Substrat aus einem Kunststoff mit Brechungsindex n = 1,67. Auf der mit optischer Qualität präparierten, bestrahlten Oberfläche befinden sich im Bereich des oberen und des unteren Markierungsdots kleine Kratzer, aus deren gekrümmten Verlauf im Bereich des Linsenelementes die Erhabenheit des Strukturelementes erkennbar ist. Besonders aus Fig. 5A ist erkennbar, dass der im unteren linken Bereich sichtbare Kratzer an der Oberfläche im Bereich des Linsenelementes etwas aufgeweitet ist, wodurch belegt ist, dass die den volumenvergrößerten Bereich überspannende Oberfläche geringfügig unter Spannung steht, so dass der Riss etwas aufklafft. Die Oberflächenspannung im bestrahlten Bereich führt zur Ausbildung einer als Linsenoberfläche tauglichen kontinuierlich gekrümmten Oberfläche mit optischer Qualität.

Fig. 6 zeigt beispielhaft einen schematischen Schnitt durch eine Reihe von Mikrolinsen ML eines mit Hilfe des Verfahrens erzeugten Mikrolinsenarrays MLA. Bei der Herstellung wurde die Oberfläche O des Kunststoffsubstrats SUB derart mit Laserstrahlung bestrahlt, dass sich lokale oberflächennahe Aufquellungen ergaben, die zur Bildung von Linsen führten.

Die erhabenen Strukturelemente wurden bei dem Beispiel aus Fig. 6 an einer unbeschichteten Oberfläche eines Optikelements erzeugt. Anhand von Fig. 7 wird eine Verfahrensvariante erläutert, bei der die mit optischer Qualität präparierte Oberfläche des Optikelements zunächst mit einer den zu strukturierenden Bereich überdeckenden anorganischen Beschichtung C versehen wird (Fig. 7A). Es kann sich z.B. um eine Antireflexbeschichtung und/oder um eine Verschleißschutzschicht handeln, um die Kratzfestigkeit zu erhöhen. Danach wird die beschichtete Oberfläche mit Laserstrahlung LAS gegebener Wellenlänge lokal bestrahlt. Die Arbeitswellenlänge ist so gewählt, dass das Material der Beschichtung C absorptionsfrei ist und sich daher nicht oder kaum aufheizt bzw. modifiziert oder ablatiert wird. Das Material des Kunststoffsubstrats SUB zeigt dagegen im Bereich der Arbeitswellenlänge eine Teilabsorption, z.B. mit Transmissionsgrad T zwischen ca. 70% und ca. 90%. Durch die Bestrahlung werden über laserstahlungsinduzierte Volumenexpansion des bestrahlten Kunstoffmaterialvolumens erhabene laserinduzierte Markierungen bzw. Strukturierungen durch die Beschichtung hindurch erzeugt (Fig. 7B). Bei geeigneter Wahl der Bestrahlungsparameter (z.B. Wellenlänge, Intensität, Bestrahlungsdauer) ist es hierbei möglich, dass sich die erhabenen Strukturelemente bilden, ohne dass die Beschichtung rissig wird oder abplatzt, so dass sich beschichtete erhabene Strukturelemente ergeben, die z.B. als Linsen eines Linsenarrays dienen können oder als Markierungselemente von Markierungen von ophthalmischen Substraten, die bereits oberflächenvergütet wurden.

Bei der im Zusammenhang mit Fig. 1 beschriebenen Variante sorgt der vertikal (d.h. in z-Richtung) verfahrbare Hubtisch in Kombination mit dem Galvanometerscanner und dem f-Theta-Objektiv dafür, dass für jeden Ort einer vorgesehenen Markierungsstruktur der Laserstrahl auch bei einer gekrümmten Substratoberfläche hinreichend genau im Fokusbereich des Laserstrahls bzw. in der zur Maske optisch konjugierten Maskenprojektionsebene liegt.

Eine Variante der oben beschriebenen Vorrichtung zum Einbringen einer oberflächennahen Markierung in ein im optischen Spektralbereich transparentes Objekt stellt der Einsatz eines sogenannten Variogalvanometerscanners dar, der zusätzlich zur Auslenkung in die horizontalen x- und y-Richtungen auch eine Verlagerung des Fokusbereiches bzw. der Maskenprojektionsebene parallel zur z-Richtung ermöglicht, so dass eine während der Erzeugung der Markierung eine Fokussierung ohne die Notwendigkeit des Einsatzes eines z-Hubtisches bei ebenen und gekrümmten Substratoberflächen möglich ist.

Eine weitere Variante sieht vor, dass unter einer fixierten Optik ein in x-, y- und z-Richtung verfahrbares Bewegungssystem von der Steuereinheit 160 so bewegt und der Laserstrahl ortsabhängig ein- und ausgeschaltet wird, dass die gewünschte Lasergravur an der Oberfläche des im optischen Spektralbereich transparenten Optikelementes erzeugt wird.

Die Verwendung von Laserstrahlungsquellen, die im nahen Infrarotbereich abstrahlen, ermöglicht auch ein günstiges indirektes Markierungsverfahren. Wasser hat im nahen Infrarotbereich größer 1,450 µm einen Bereich starker Absorption. Dies kann zur Lasermarkierung genutzt werden, indem auf die zu markierende Oberfläche Wasser aufgedampft oder auf andere Weise so aufgebracht wird, dass eine relativ dünne Wasserschicht entsteht. Das auf diese Weise benetzte Optikelement wird dann wie beschrieben im Wege der Direktstrukturierung oder im Maskenprojektionsverfahren bestrahlt. Durch die Absorption in der Wasserschicht entsteht lokal Wärme, die in dem darunterliegenden Substrat zu den gewünschten permanenten Materialveränderungen führt. Nach Beendigung der Markierung kann die absorbierende, wasserhaltige Hilfsschicht leicht und rückstandsfrei entfernt werden Speziell für diese Verfahrensvariante kommt beispielsweise ein Tm-Laser als Laserstrahlungsquelle in Frage.

Die hier beispielhaft präsentierten Versuche wurden mit Laserpulsen mit typischen Pulsdauern im Bereich von Mikrosekunden (ms) durchgeführt. Es ist auch möglich, Ultrakurzpulslaser zu verwenden, die in der Lage sind, Laserpulse mit typischen Pulslängen im Bereich von Pikosekunden (ps) oder im Bereich von Femtosekunden (fs) zu emittieren. Dabei können ggf. andere Wechselwirkunsmechanismen zwischen Laserstrahlung und Substratmaterial wirksam sein.

Das Verfahren kann für die Markierung bzw. Strukturierung unterschiedlicher im sichtbaren Spektralbereich transparenter Materialien bzw. daraus gefertigten Optikelemente verwendet werden, insbesondre zur Markierung von Brillenlinsen, Kontaktlinsen oder Intraokularlinsen. Auch Kunststofflinsen für mehrlinsige optische Systeme, z.B. für Objektive, können markiert werden. Weiterhin kann das Verfahren zur Herstellung von Mikrolinsen oder Mikrolinsenarrays verwendet werden.

Weiterhin ist eine Markierung von Gussformen für Kontaktlinsen oder Brillenlinsen möglich, wenn diese aus transparentem Kunststoff-Material mit geeigneter Teilabsorption bestehen. In diesem Fall kann an einer mit optischer Qualität polierten Fläche, die zur Formgebung für die Vorderoder Rückseite einer Linse vorgesehen ist, eine Markierung mit definierten Erhöhungen erzeugt werden, die nach dem Abformprozess zu vertieften Markierungsstrukturen am fertigen Optikelement führen.

## Patentansprüche

1. Verfahren zur Herstellung einer dauerhaften Markierung in einem Optikelement, das aus einem im sichtbaren Spektralbereich transparenten Material besteht, worin ein Markierungsbereich des Optikelementes mit Laserstrahlung zur Erzeugung von lokalen, oberflächennahen Materialveränderungen derart bestrahlt wird, dass eine Markierung vorgebbarer Form und Größe erzeugt wird, **dadurch gekennzeichnet, dass** die Laserstrahlung eine Arbeitswellenlänge λ aus dem Wellenlängenbereich zwischen 1.1 µm und 9.2 µm hat, und, dass eine Arbeitswellenlänge verwendet wird, für die das Material des Optikelementes eine Teilabsorption mit einem Transmissionsgrad zwischen 60% und 98% zeigt.

2. Verfahren nach Anspruch 1, worin der Transmissionsgrad zwischen 75 % und 95% liegt.

3. Verfahren nach Anspruch 1 oder 2, worin die Laserstrahlung eine Arbeitswellenlänge λ aus dem Wellenlängenbereich zwischen 1.5 µm und 5,0 µm hat.

4. Verfahren nach einem der vorhergehenden Ansprüche, worin das Material des Optikelementes ein Kunststoffmaterial ist, vorzugsweise Polycarbonat (PC), Polymethylmethacrylat (PMMA), Acryl, wasserhaltiges Acryl oder ein anderes für ophthalmische Substrate geeignetes Kunststoffmaterial.

5. Verfahren nach einem der vorhergehenden Ansprüche, worin das Optikelement zumindest in einem zu modifizierenden Bereich aus einem Kunststoffmaterial besteht und worin Strahlparameter der Laserstrahlung derart eingestellt werden, dass im bestrahlten oberflächennahen Bereich eine laserinduzierte Volumenvergrößerung, vorzugsweise ohne Materialabtrag, erzeugt wird, wobei vorzugsweise im Markierungsbereich gegenüber angrenzenden, nicht bestrahlten Bereichen erhabene Strukturelemente erzeugt werden, die insbesondere mit einer unverletzten Oberfläche erzeugt werden, die sich kontinuierlich gekrümmt über einen volumenvergrößerten Bereich spannt.

6. Verfahren nach Anspruch 5, worin das Optikelement zunächst mit einer den Markierungsbereich überdeckenden Beschichtung versehen wird und danach erhabene Strukturelemente durch die Beschichtung hindurch erzeugt werden, wobei vorzugsweise die Beschichtung für die Arbeitswellenlänge absorptionsfrei und/oder modifikationsresistent ist und/oder aus anorganischem Material besteht und die erhabenen Strukturelemente ohne Zerstörung der sie überdeckenden Beschichtung gebildet werden.

7. Verfahren nach einem der vorhergehenden Ansprüche, worin als Laserstrahlungsquelle ein Faserlaser verwendet wird, wobei der Faserlaser vorzugsweise ein Thulium-dotierter Faserlaser oder ein Holmium-dotierter Faserlaser oder ein Erbium-dotierter Faserlaser ist

8. Verfahren nach einem der vorhergehenden Ansprüche, worin eine Brillenlinse, eine Kontaktlinse oder eine Intraokularlinse an einer mit optischer Qualität präparierten Oberfläche mit einer Markierung versehen wird.

9. Verfahren nach einem der vorhergehenden Ansprüche, worin ein in einem Fokusbereich fokussierter oder ein von einer Maske auf einen Beleuchtungsfleck projizierter Laserstrahl erzeugt und ein Markierungsbereich des zu bestrahlenden Optikelementes mit dem Laserstrahl zur Erzeugung von lokalen, oberflächennahen Materialveränderungen bestrahlt wird, wobei eine Relativbewegung zwischen dem Optikelement und dem Laserstrahl erzeugt wird, so dass der Laserstrahl nacheinander unterschiedliche Orte des Markierungsbereichs bestrahlt und eine Markierung vorgebbarer Form und Größe erzeugt wird.

10. Verfahren nach Anspruch 9, worin eine Intensitätsverteilung der Laserstrahlung innerhalb des Laserstrahls durch Strahlformung beeinflusst wird, wobei zur Strahlformung vorzugsweise eine Strahlformungseinrichtung mit mindestens einem Strahlformungselement aus der Gruppe: Konturmaske, Grautonmaske, Refraktives optisches Element, Diffraktives optisches Element verwendet wird.

11. Verwendung einer Vorrichtung mit einem Substrathalter (102) zur Aufnahme eines Optikelements (110), einem Lasersystem mit einer Laserstrahlungsquelle (120) und einem Strahlführungssystem (124) zur Führung eines Laserstrahls auf eine Oberfläche des Optikelements, wobei die Laserstrahlungsquelle (120) eine Arbeitswellenlänge λ aus dem Wellenlängenbereich zwischen 1.1 µm und 9.2 µm hat, zur Herstellung einer dauerhaften Markierung in einem Optikelement, das aus einem im sichtbaren Spektralbereich transparenten Material besteht, nach dem Verfahren gemäß einem der Ansprüche 1 bis 10.

12. Verwendung nach Anspruch 11, worin die Laserstrahlungsquelle eine Arbeitswellenlänge λ aus dem Wellenlängenbereich zwischen 1.5 µm und 5,0 µm hat und/oder worin die Laserstrahlungsquelle ein Faserlaser (120) ist, wobei der Faserlaser vorzugsweise ein ein Thulium-dotierter Faserlaser oder ein Holmium-dotierter Faserlaser oder ein Erbium-dotierter Faserlaser ist.

13. Verwendung nach Anspruch 11 oder 12, worin die Vorrichtung **gekennzeichnet ist durch** ein Bewegungssystem zur Erzeugung einer Relativbewegung zwischen dem Optikelement und dem Laserstrahl derart, dass das Optikelement **durch** den Laserstrahl an unterschiedlichen Stellen eines Markierungsbereiches bestrahlbar ist.

14. Verwendung nach einem der Ansprüche 11 bis 13, worin das Lasersystem eine Strahlformungseinrichtung zur aktiven Beeinflussung der Intensitätsverteilung innerhalb des Laserstrahls aufweist, wobei die Strahlformungseinrichtung vorzugsweise mindestens ein Strahlformungselement aus der Gruppe: Konturmaske, Grautonmaske, Refraktives optisches Element, Diffraktives optisches Element aufweist.

15. Optikelement erhältlich durch ein Verfahren gemäß einem der Ansprüche 1 bis 10, mit einem aus einem im sichtbaren Spektralbereich transparenten Kunststoffmaterial bestehenden Substrat, insbesondere Brillenlinse, Kontaktlinse oder Intraokularlinse, wobei an einer optischen Oberfläche des Substrats ein Bereich mit einer Strukturierung vorgesehen ist, wobei die Strukturierung durch laserstrahlungsinduzierte lokale Volumenvergrößerung erzeugte erhabene Strukturelemente aufweist.

## Claims

1. Method for producing a permanent mark in an optical element which consists of a material that is transparent in the visible spectral region, wherein a marking region of the optical element is irradiated with laser radiation in order to generate local, near-surface material changes in such a way that a mark of prescribable shape and size is generated, **characterized in that** the laser radiation has an operating wavelength λ from the wavelength region between 1.1 µm and 9.2 µm, and **in that** an operating wavelength is used for which the material of the optical element exhibits a partial absorption with a transmittance between 60% and 98%.

2. Method according to Claim 1, wherein the transmittance is between 75% and 95%.

3. Method according to Claim 1 or 2, wherein the laser radiation has an operating wavelength λ from the wavelength region between 1.5 µm and 5.0 µm.

4. Method according to one of the preceding claims, wherein the material of the optical element is a plastics material, preferably polycarbonate (PC), polymethyl methacrylate (PMMA), acryl, water-containing acryl or another plastics material suitable for ophthalmic substrates.

5. Method according to one of the preceding claims, wherein the optical element consists of a plastics material at least in a region to be modified, and wherein beam parameters of the laser radiation are set in such a way that a laser-induced increase in volume, preferably without removal of material, is generated in the irradiated near-surface region, raised structural elements, preferably being generated in the marking region opposite adjacent, non-irradiated regions, which structural elements are generated in particular with an undamaged surface which extends over a region of increased volume in a continuously curved fashion.

6. Method according to Claim 5, wherein the optical element is firstly provided with a coating covering the marking region, and thereafter raised structural elements are generated through the coating, for the operating wavelength the coating preferably being free of absorption and/or resistant to modification and/or consisting of inorganic material and the raised structural elements being formed without destruction of the coating covering them.

7. Method according to one of the preceding claims, wherein a fibre laser is used as laser radiation source, the fibre laser preferably being a thulium-doped fibre laser or a holmium-doped fibre laser or an erbium-doped fibre laser.

8. Method according to one of the preceding claims, wherein a spectacle lens, a contact lens or an intraocular lens is provided with a mark on a surface prepared with optical quality.

9. Method according to one of the preceding claims, wherein a laser beam focused in a focal region or projected by a mask onto an illumination spot is generated, and a marking region of the optical element to be irradiated is irradiated with the laser beam in order to generate local, near-surface material changes, a relative movement between the optical element and the laser beam being generated such that the laser beam sequentially irradiates different locations of the marking region, and a mark of prescribed shape and size is generated.

10. Method according to Claim 9, wherein an intensity distribution of the laser radiation within the laser beam is influenced by beam-shaping, preferably a beam-shaping device having at least one beam-shaping element from the group: contour mask, grey-scale mask, refractive optical element and diffractive optical element being used for beam-shaping.

11. Use of an apparatus having a substrate holder (102) for holding an optical element (110), a laser system with a laser radiation source (120) and a beam guiding system (124) for guiding a laser beam onto a surface of the optical element, the laser radiation source (120) having an operating wavelength λ from the wavelength region between 1.1 µm and 9.2 µm, for producing a permanent mark in an optical element which consists of a material that is transparent in the visible spectral region, by the method according to one of Claims 1 to 10.

12. Use according to Claim 11, wherein the laser radiation source has an operating wavelength λ from the wavelength region between 1.5 µm and 5.0 µm and/or wherein the laser radiation source is a fibre laser (120), the fibre laser preferably being a thulium-doped fibre laser or a holmium-doped fibre laser or an erbium-doped fibre laser.

13. Use according to Claim 11 or 12, wherein the apparatus is **characterized by** a movement system for generating a relative movement between the optical element and the laser beam in such a way that the optical element can be irradiated by the laser beam at different sites of a marking region.

14. Use according to one of Claims 11 to 13, wherein the laser system has a beam-shaping device for actively influencing the intensity distribution within the laser beam, the beam-shaping device preferably having at least one beam-shaping element from the group: contour mask, grey-scale mask, refractive optical element and diffractive optical element.

15. Optical element obtainable by a method according to one of Claims 1 to 10, having a substrate consisting of a plastics material that is transparent in the visible spectral region, in particular a spectacle lens, contact lens or intraocular lens, a structured region being provided on one optical surface of the substrate, the structuring having raised structural elements generated by laser-radiation-induced local increase in volume.

## Revendications

1. Procédé de fabrication d'un marquage durable dans un élément optique composé d'une matière transparente dans la zone spectrale visible, une zone de marquage de l'élément optique étant irradiée par rayonnement laser pour produire des changements de matière locaux proches de la surface de façon à produire un marquage de forme et taille prédéfinissables, **caractérisé en ce que** le rayonnement laser présente une longueur d'onde de travail λ dans la plage de longueurs d'onde comprise entre 1,1 µm et 9,2 µm et qu'une longueur d'onde de travail est utilisée pour laquelle la matière de l'élément optique présente une absorption partielle avec un degré de transmission compris entre 60 % et 98 %.

2. Procédé selon la revendication 1, le degré de transmission étant compris entre 75 % et 95 %.

3. Procédé selon la revendication 1 ou 2, le rayonnement laser présentant une longueur d'onde de travail λ dans la plage de longueurs d'onde comprise entre 1,5 µm et 5,0 µm.

4. Procédé selon l'une quelconque des revendications précédentes, la matière de l'élément optique étant une matière plastique, de préférence du polycarbonate (PC), du polyméthacrylate de méthyle (PMMA), de l'acryle, de l'acryle aqueux ou une autre matière plastique adaptée à des substrats ophtalmiques.

5. Procédé selon l'une quelconque des revendications précédentes, l'élément optique se composant au moins d'une zone en matière plastique à modifier et les paramètres de faisceau du rayonnement laser étant réglés de façon à produire un agrandissement de volume induit par laser, de préférence sans retrait de matière, dans la zone irradiée proche de la surface, des éléments structurels saillants étant de préférence produits dans la zone de marquage par rapport aux zones connexes non irradiées, lesdits éléments étant notamment produits avec une surface non endommagée courbe s'étendant en continu sur une zone de volume agrandi.

6. Procédé selon la revendication 5, l'élément optique étant d'abord pourvu d'un revêtement recouvrant la zone de marquage avant de produire au travers les éléments structurels saillants par revêtement, de préférence, à la longueur d'onde de travail, le revêtement étant non-absorbant et/ou résistante aux modifications et/ou composé de matière anorganique et les éléments structurels saillants étant formés sans destruction du revêtement les recouvrant.

7. Procédé selon l'une quelconque des revendications précédentes, la source de rayonnement laser utilisée étant un laser à fibre, le laser à fibre étant de préférence un laser à fibre doté de thulium ou un laser à fibre doté d'holmium ou un laser à fibre doté d'erbium.

8. Procédé selon l'une quelconque des revendications précédentes, une lentille de lunette, une lentille de contact ou une lentille intraoculaire étant pourvues d'un marquage au niveau d'une surface préparée de qualité optique.

9. Procédé selon l'une quelconque des revendications précédentes, un faisceau laser focalisé dans une zone focale ou projeté par un masque sur une tâche éclairée étant produit et une zone de marquage de l'élément optique à irradier étant irradiée par le faisceau laser pour produire des modifications de matière locales proches de la surface, un mouvement relatif étant produit entre l'élément optique et le faisceau laser, de sorte que le faisceau laser irradie successivement différents sites de la zone de marquage et qu'un marquage de forme et taille prédéfinissables est produit.

10. Procédé selon la revendication 9, la répartition de l'intensité du rayonnement laser étant influencée à l'intérieur du faisceau laser par formation de faisceau, la formation de faisceau utilisant de préférence un dispositif de formation de faisceau doté d'au moins un élément de formation de faisceau compris dans le groupe : masque de contour, masque de niveaux de gris, élément optique réfractif, élément optique diffractif.

11. Utilisation d'un dispositif doté d'un support de substrat (102) permettant de recevoir un élément optique (110), un système laser doté d'une source de rayonnement laser (120) et d'un système de guidage de faisceau (124) permettant de guider un faisceau laser sur une surface de l'élément optique, la source de rayonnement laser (120) présentant une longueur d'onde de travail λ dans la plage de longueurs d'onde comprise entre 1,1 µm et 9,2 pm, afin de réaliser un marquage durable dans un élément optique composé d'une matière transparente dans la zone spectrale visible, selon le procédé selon l'une quelconque des revendications 1 à 10.

12. Utilisation selon la revendication 11, la source de rayonnement laser présentant une longueur d'onde de travail dans la plage de longueurs d'onde comprise entre 1,5 µm et 5,0 µm et/ou la source de rayonnement laser étant un laser à fibre (120), le laser à fibre étant de préférence un laser à fibre doté de thulium ou un laser à fibre doté d'holmium ou un laser à fibre doté d'erbium.

13. Utilisation selon la revendication 11 ou 12, le dispositif étant **caractérisé par** la présence d'un système de déplacement permettant de produire un mouvement relatif entre l'élément optique et le faisceau laser de telle sorte que l'élément optique peut être irradié par le faisceau laser en différents points d'une zone de marquage.

14. Utilisation selon l'une quelconque des revendications 11 à 13, le système laser comportant un dispositif de formation de faisceau permettant d'influencer activement la répartition d'intensité à l'intérieur du faisceau laser, le dispositif de formation de faisceau comportant de préférence au moins un élément de formation de faisceau appartenant au groupe : masque de contour, masque de niveaux de gris, élément optique réfractif, élément optique diffractif.

15. Élément optique obtenu par un procédé selon l'une quelconque des revendications 1 à 10, avec un substrat composé de matière plastique transparente dans la zone spectrale visible, notamment une lentille de lunette, une lentille de contact ou une lentille intraoculaire, une zone étant pourvue d'une structuration au niveau d'une surface optique du substrat, la structuration comportant des éléments structurels saillants produits par agrandissement de volume local induit par rayonnement laser.
